# EUROPEAN PATENT APPLICATION

(11) **EP 4 585 900 A1**
(43) Date of publication of application: **16.07.2025**
(21) Application number: 23861700.5
(22) Date of filing: 26.04.2023
(51) Int. Cl.: G01N 1/40, B01D 29/01, G01N 1/10

(54) **FILTER DEVICE, FILTER FIXING TOOL, AND FILTERING METHOD**

(30) Priority: 07.09.2022 JP 2022142368
(71) Applicant: Hitachi High-Tech Corporation, Minato-ku Tokyo 105-6409 (JP)
(72) Inventor: ISHIMARU, Masako, Tokyo 100-8280 (JP); FUKUZONO, Shinichi, Tokyo 105-6409 (JP); HISAMATSU, Mitsuko, Tokyo 105-6409 (JP)
(74) Representative: MERH-IP Matias Erny Reichl Hoffmann Patentanwälte PartG mbB
(86) International application number: PCT/JP2023/016422
(87) International publication number: WO 2024/053155

(57) **Abstract**

By separating the part where the airtightness is established between the filter container and the elastic body from the part where the filter container is fixed, the filter container is easily attached or detached with a small force while maintaining the airtightness between the filter container and the elastic body. The filter device includes: a funnel 10 having an inlet 11 through which the liquid sample is introduced and an outlet 12 having an opening area smaller than an opening area of the inlet 11; a filter container 20 to which a tip portion which includes the outlet 12 of the funnel 10 is inserted and a filter 23 that collects an object contained in the liquid sample; a rubber plug 40 having a through-hole 41 serving as a flow path for the liquid sample that has passed through the filter 23; and a filter fixing tool 30 that abuts on the filter container 20 to support the filter container 20 and that presses the filter container 20 against the rubber plug 40.

## Description

### Technical Field

The present disclosure relates to a filter device, a filter fixing tool, and a filtering method for collecting fine particles, such as microorganisms and a substance to be analyzed, from a liquid sample such as water, medicine, a reagent, a beverage, and a cosmetic.

### Background Art

The membrane filter method is a method for filtering a liquid sample through a membrane filter, and collecting and detecting, on the filter, fine particles and a substance which is compatible with the filter, or the like. For example, in a case where bacteria are detected from a liquid sample of 10 mL or more, it is difficult to directly add the entire amount of the sample to a culture medium, and hence it is necessary to concentrate the bacteria by means of filtration. In addition, in a case where a substance obstructing analysis is present in a liquid, the membrane filter method is also used for the purpose of removing the substance.

In general, a device for aspiration/filtration called an aspiration manifold is used for filtration. An aspiration manifold includes a pipe that serves as a base, an aspiration pump and an adapter which are connected to the pipe, and performs aspiration/filtration by fixing the filter container onto the adapter and using the aspiration pump to establish a negative pressure on the downstream side of the filter. By coupling a funnel having a size corresponding to the volume of the liquid sample to the filter container, it is possible to filter a large-volume sample.

The membrane filter method is also used to detect microorganism (a bacterium or fungi) in a liquid sample. In a conventional microbial detection method, after a sample is filtered through a membrane filter having a diameter of 47 mm, the filter is placed on an agar medium to grow bacteria on the filter, and colonies generated on the medium are visually detected. Alternatively, a method has been adopted in which a sample is filtered using a membrane filter, and then the filter is placed in a liquid medium to grow bacteria, and the turbidity of the medium is visually detected. This method has the drawback of taking one day to several days for bacteria to grow in a visible quantity and of involving a long testing time.

Therefore, as methods for detecting microorganisms more quickly than when using visual observation, measurement techniques have been developed such as a technique for detecting substances contained in microbial cells (adenosine triphosphate (ATP) bioluminescence, nucleic acid amplification, immunological methods, and so forth) and solid phase cytometry that involves counting bacteria directly. Using such methods, an improvement in the concentration rate of microorganisms leads to an improvement in microbial detection sensitivity. Therefore, a method is adopted herein in which filtration is performed using a filter having a diameter smaller than that used conventionally, thus improving the number of bacteria per unit area of the filter. For example, by using a filter having a diameter of 10 mm, the concentration ratio is improved by about 20 times in comparison with a filter having a diameter of 47 mm. The same applies to analysis other than microbial detection, for example, in a case where fine particles in a liquid sample are collected on a filter and the mass of an organic substance is measured, or in a case where an antigen is collected using a filter obtained by immobilizing an antibody having an affinity for an antigen in a liquid sample and where fluorescence detection is performed.

The filtration of a large-volume liquid sample using a filter having a small diameter is performed by connecting, to the filter container, a funnel having a larger diameter than the diameter of the filter container. Here, it is necessary to implement a measure for fixing an unstable shape in which a large diameter funnel is connected to a small-diameter filter container in an upright manner while maintaining the airtightness of the flow path. In order to achieve a user requirement to manually perform filtration using an aspiration manifold, as performed conventionally, instead of introducing a special filter device, a tool for fixing the filter container and the funnel to the adapter of the aspiration manifold is required.

Patent Literature 1 discloses a device configuration in which a funnel is connected to a primary side of a filter container and an aspiration flow path is connected to a secondary side of the filter container. Patent Literature 1 discloses a device configuration in which the filter container and the funnel are individually connected to a movable device to achieve automation of the attachment and detachment of the filter container, the funnel, and the flow path. However, in order to meet the user requirement to manually perform filtration using a conventional aspiration manifold, a technique to satisfy the requirement for the filter container and the funnel to be easily attached and detached manually has been necessary.

### Citation List

### Patent Literature

PTL 1: JP 2003-139704 A

### Summary of Invention

### Technical Problem

In a case where a substance in a liquid is concentrated on a filter and then is analyzed, the concentration rate increases as the filter diameter decreases, and the analysis sensitivity is improved. In order to fix the unstable shape resulting from connecting a large-diameter funnel onto a small-diameter filter container, in an upright manner while maintaining airtightness, a method is generally adopted with which a filter container is inserted into a fixing tool incorporating a rubber plug with hole or an O-ring, and the filter container is fixed at the point of contact between the outer surface of the filter container and the rubber plug or the O-ring. In this case, the fixing of the filter container and the airtightness of the flow path are established in the same part of the lateral surface of the filter container (the part where the rubber plug or the O-ring is in contact). Therefore, in a case where it is necessary to remove the filter container after filtration in order to analyze the substance collected on the filter, there arises a problem that the filter container needs to be pulled out with a strong force due to friction with the rubber plug or the O-ring. In the case where it is assumed that the user desires to manually perform filtration as performed conventionally, a small filter container is manually pulled out with a strong force. In this case, there is a problem that the risk of contaminating the filter container by inadvertently touching the inside of the filter container or dropping the filter container increases, and thereby reducing the subsequent accuracy of analysis.

Therefore, an object of the present disclosure is to provide a filter device, a filter fixing tool, and a filtering method that enable airtightness between a filter container and an elastic body to be maintained and the filter container to be easily attached or detached using minimal force, by separating the part where the airtightness is established between the filter container and the elastic body from the part where the filter container is fixed.

### Solution to Problem

A filter device of the present disclosure is a filter device for filtering a sample, the filter device including: a funnel having an inlet through which the sample is introduced and an outlet having an opening area smaller than an opening area of the inlet; a cylindrical filter container having an inlet, to which a tip portion which includes the outlet of the funnel is coupled, and an outlet, and having, between the inlet and the outlet, a filter that collects an object contained in the sample; an elastic body that has a through-hole serving as a flow path for the sample that has passed through the filter, an inlet periphery of the through-hole being in contact with the filter container; and a filter fixing tool that abuts on the filter container to support the filter container and that presses the filter container against the elastic body, wherein the filter fixing tool presses the filter container against the elastic body to hermetically seal the inlet periphery of the through-hole in the elastic body by means of a contact surface of the filter container which corresponds to the inlet periphery.

### Advantageous Effects of Invention

According to the present disclosure, it is possible to easily attach or detach the filter container with a small force while maintaining airtightness between the filter container and the elastic body, by separating the part where airtightness is established between the filter container and the elastic body from the part where the filter container is fixed.

Problems, configurations, advantageous effects other than those described above will be clarified by the following descriptions of the embodiments.

### Brief Description of Drawings

[FIG. 1] FIG. 1 Is a diagram showing an example of a filter device according to a first embodiment.
[FIG. 2] FIG. 2 is a flowchart showing a method for performing filtration using the filter device according to the first embodiment.
[FIG. 3] FIG. 3 is a diagram showing an example of a filter device according to a second embodiment.
[FIG. 4] FIG. 4 Is a diagram showing an example of a filter device according to a third embodiment.
[FIG. 5] FIG. 5 Is a diagram showing an example of a filter device according to a fourth embodiment.
[FIG. 6] FIG. 6 Is a diagram showing an example of a filter device according to a fifth embodiment.
[FIG. 7] FIG. 7 is a six-sided view showing an example of a filter fixing tool according to a sixth embodiment.
[FIG. 8] FIG. 8 is a perspective view and a cross-sectional view showing the example of the filter fixing tool according to the sixth embodiment.
[FIG. 9] FIG. 9 is a six-sided view showing an example of a filter fixing tool according to a seventh embodiment.
[FIG. 10] FIG. 10 is a perspective view and a cross-sectional view showing the example of the filter fixing tool according to the seventh embodiment.
[FIG. 11] FIG. 11 is a six-sided view showing an example of a filter fixing tool according to an eighth embodiment.
[FIG. 12] FIG. 12 is a perspective view and a cross-sectional view showing the example of the filter fixing tool according to the eighth embodiment.
[FIG. 13] FIG. 13 Is a diagram showing an example of a filter device according to a ninth embodiment.
[FIG. 14] FIG. 14 is a six-sided view showing an example of a filter fixing tool according to a tenth embodiment.
[FIG. 15] FIG. 15 is a perspective view and a cross-sectional view showing the example of the filter fixing tool according to the tenth embodiment.
[FIG. 16] FIG. 16 is a flowchart showing a method for performing filtration using the filter device according to the ninth and tenth embodiments.

### Description of Embodiments

Hereinafter, embodiments of the present disclosure will be described in detail with reference to the drawings. In the following embodiments, it is understood that the constituent elements are not necessarily essential unless otherwise specified or considered to be obviously essential in principle.

Hereinafter, the embodiments of the present disclosure will be described with reference to the drawings.

### First Embodiment

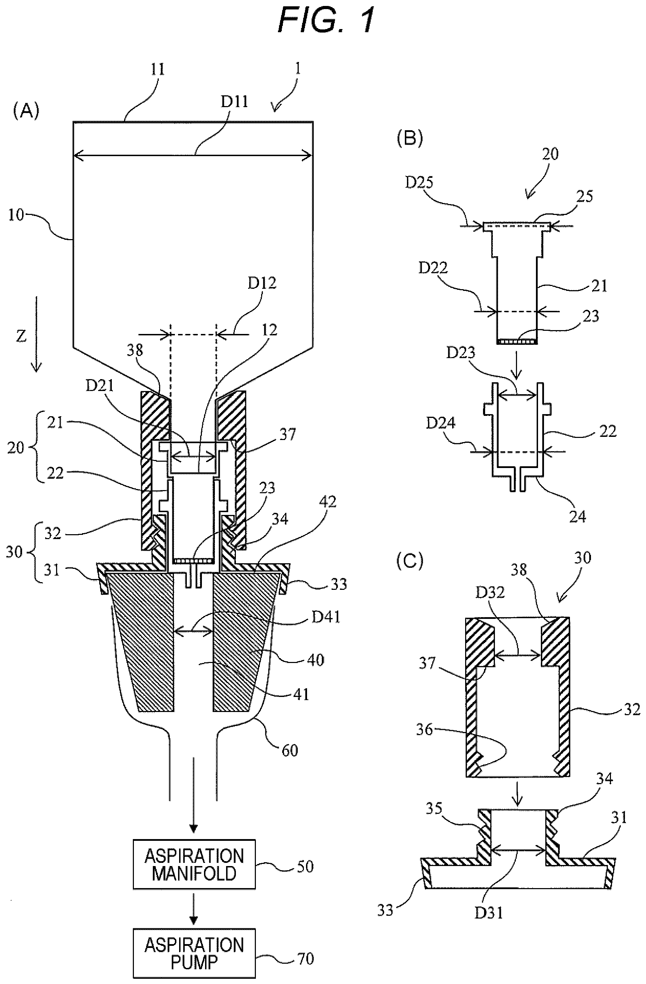

FIG. 1 is a diagram showing an example of a filter device according to a first embodiment. A configuration of a filter device 1 according to the first embodiment will be described with reference to FIG. 1. FIG. 1(A) is a view showing a state where the filter device 1 according to the first embodiment is attached to an adapter 60, FIG. 1(B) is a view showing a state where a filter container 20 is disassembled, and FIG. 1(C) is a view showing a state where a filter fixing tool 30 is disassembled.

### (Configuration of filter device 1)

The filter device 1 includes a funnel 10, a filter container 20, a filter fixing tool 30, and an elastic body 40. The filter device 1 is a device for filtering a liquid sample. The elastic body 40 according to the first embodiment is a commercially available rubber plug with hole. Hereinafter, the elastic body 40 is referred to as the rubber plug 40 with hole or the rubber plug 40. The structure including the funnel 10, the filter container 20, and the filter fixing tool 30 can be attached to and detached from the commercially available rubber plug 40 with hole. The rubber plug 40 with hole can be repeatedly used, and has an advantage that manual handling is easy. As long as the hole diameter D41 of a through-hole 41 of the rubber plug 40 with hole is smaller than the outer diameter D24 of the filter container 20 (cover 22), the rubber plug 40 with hole can be used for the filter device 1, and thus there is also an advantage that a commercially available rubber plug 40 with hole can be used. An adapter 60 can be connected to the upstream side of an aspiration manifold 50, and the rubber plug 40 with hole is attached to the adapter 60. An aspiration pump 70 can be connected to the downstream side of the aspiration manifold 50. By driving the aspiration pump 70, a liquid sample that is introduced to the funnel 10 passes from the funnel 10 to the filter container 20, the rubber plug 40 with hole, the adapter 60, and the aspiration manifold 50 in that order.

The aspiration manifold 50 is a commercially available product, and is, for example, a laboratory manifold (product ID: 4889) manufactured by Pall Corporation. The adapter 60 is an adapter which can be connected to the aspiration manifold 50, and is, for example, a laboratory manifold standard adapter (product ID: 4892) manufactured by Pall. The aspiration manifold 50 may be, for example, an aspiration manifold manufactured by Merck & Co. (catalog number: EZFIT0 LD3). In the case of an aspiration manifold manufactured by Merck, parts can be attached without a tool, and maintenance such as cleaning and sterilization is easy. A cup-shaped adapter 60 can be attached to the manifold exemplified above, and a rubber plug 40 matching the size of the adapter 60 is fitted into the adapter 60. When the outer surface of the rubber plug 40 and the inner surface of the adapter 60 are in contact with each other, the airtightness of the flow path of the liquid sample is maintained.

### (Funnel 10)

The funnel 10 is a sterilizable material, and is made of metal or resin, for example. Metallic materials are highly durable, can be repeatedly washed and sterilized for use, and are economical. Meanwhile, resin materials are inexpensive, and when made disposable, such materials eliminate the need for cleaning work and improve convenience. In addition, there is also an advantage that, by using a transparent resin, the progress of filtration can be visually confirmed even from outside a clean bench.

The funnel 10 has an inlet 11 through which a liquid sample is introduced and an outlet 12 having an opening area smaller than that of the inlet. Specifically, the opening area of the inlet 11 is four or more times the opening area of the outlet 12. The inner diameter D11 of the inlet 11 of the funnel 10 is larger than the inner diameter D21 of the filter container 20 (filter body portion 21). In addition, the funnel 10 has a volume capable of holding a liquid of about 100 mL. The volume of the funnel 10 can be appropriately selected according to the amount of the liquid sample. The outer diameter D12 of the outlet 12 of the funnel 10 is substantially the same as the inner diameter D21 of the filter body portion 21. Therefore, by inserting the lower tip of the funnel 10 into the filter container 20, the airtightness between the funnel 10 and the filter container 20 is maintained.

### (Filter container 20)

The filter container 20 includes a filter body portion 21, and a cover 22 that covers the outer peripheral surface of the filter body portion 21. The filter container 20 according to the first embodiment is a filter assembly configured from two parts, namely, the filter body portion 21 and the cover 22. The filter body portion 21 and the cover 22 have a substantially cylindrical shape, the filter 23 is fixed to the bottom surface of the filter body portion 21, and the effective area of the filter (the area, of the entire filter, across which the sample liquid is filtered) is substantially the same as the area inside the bottom surface of the filter body portion 21. The shape of the filter body portion 21 and the cover 22 is not limited to a regular cylindrical shape, rather, as long as the shape is a cylindrical shape, the shape may be a polygonal cylindrical shape or an elliptical cylindrical shape. The diameters of the filter body portion 21 and the cover 22 may also be non-uniform. The filter 23 collects an object which is contained in the liquid sample. The tip portion, which includes the outlet 12 of the funnel 10, is inserted into the filter body portion 21. Here, the tip portion, which includes the outlet 12 of the funnel 10, is inserted into the filter body portion 21, but it is sufficient as long as the tip portion having the outlet 12 of the funnel 10 and the filter body portion 21 are coupled together. The outer diameter D22 of the part of the filter body portion 21 inserted into the cover 22 is substantially the same as the inner diameter D23 of the cover 22. Therefore, the outer peripheral surface of the part of the filter body portion 21 inserted into the cover 22 and the inner peripheral surface of the cover 22 are in contact with each other, and the airtightness between the filter body portion 21 and the cover 22 is maintained. The outer diameter D24 of a bottom surface 24 of the cover 22 is larger than the diameter D41 of the through-hole 41 of the rubber plug 40. Therefore, the bottom surface 24 of the cover 22 abuts on an upper surface 42 of the rubber plug 40, and thus the airtightness is maintained. Note that the funnel 10 may be prepared in a state of being coupled to the filter container 20 in advance. In addition, the outlet inner diameter of the funnel 10 and the inlet outer diameter of the filter container 20 may be substantially the same, and the inlet portion of the filter container 20 may be inserted into the outlet portion of the funnel 10. Alternatively, a member having a structure in which the funnel 10 and the filter container 20 are coupled together may be manufactured by integral molding using a material such as resin, and may be folded and separated at a certain position between the funnel 10 and the filter container 20 after filtration. Furthermore, the filter container 20 may be tapered, and the inlet area may have a larger shape than the filter effective area.

### (Filter Fixing Tool 30)

The filter fixing tool 30 includes a base 31 and a presser 32. The presser 32 abuts on the filter container 20 to support the filter container 20. The base 31 secures the presser 32 that presses the filter container 20 against the rubber plug 40 with hole. The base 31 is fitted to the upper part of the rubber plug 40 and fixed to the rubber plug 40. The base 31 has a tapered base fixing portion 33 fitted into the upper part of the rubber plug 40. The base 31 includes a filter housing portion 34 that houses some or all of the filter container 20. A male threaded section 35 subjected to male thread machining is formed on an outer peripheral surface of the filter housing portion 34. A portion of the presser 32 facing the male threaded section 35 has a female threaded section 36 subjected to female thread machining. The presser 32 is fixed to the base 31 by screwing the female threaded section 36 onto the male threaded section 35. A threaded section may be provided on the inner peripheral surface of the filter housing portion 34, and a threaded section may be provided on the outer peripheral surface of the presser 32.

The inner diameter D31 of the filter housing portion 34 is larger than the outer diameter D24 of the cover 22. Therefore, the filter container 20 can be easily taken in and out of the filter housing portion 34 without frictional resistance. In addition, the presser 32 has a filter support portion 37 that abuts on an upper surface 25 of the filter body portion 21. The filter support portion 37 abuts on the upper surface 25 of the filter body portion 21 to regulate the upward movement of the filter body portion 21. The filter support portion 37 presses the filter container 20 against the rubber plug 40 with hole to hermetically seal the inlet periphery of the through-hole 41 of the rubber plug 40 with hole by means of a contact surface of the filter container 20 which corresponds to the inlet periphery. The inner diameter D32 of the filter support portion 37 is smaller than the outer diameter D25 of the upper surface 25 of the filter body portion 21. In addition, a funnel support portion 38 that supports the funnel 10 is provided to the upper part of the presser 32 to prevent lateral swinging of the funnel 10.

### (Rubber plug 40 with hole)

The rubber plug 40 with hole is disposed downstream of the filter container 20 and contacts the bottom surface 24 of the filter container 20. The rubber plug 40 with hole has the through-hole 41 which serves as a flow path for the liquid sample that has passed through the filter 23. The above-described base 31 is fitted into the rubber plug 40 with hole.

### (Method for Performing Filtration (Filtering Method) Using Filter Device 1 according to First Embodiment)

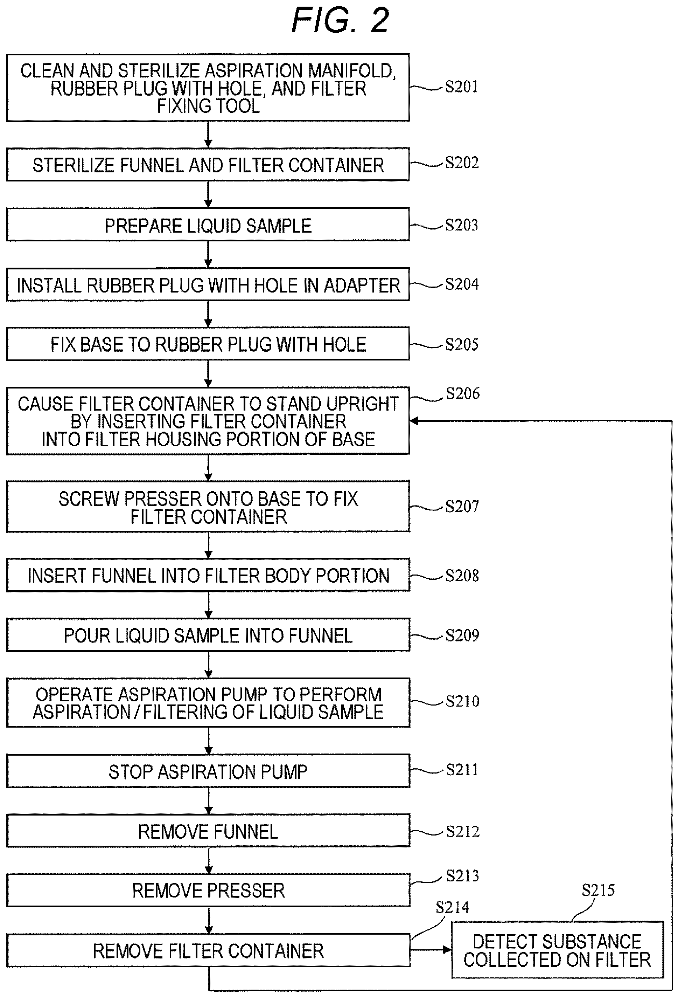

FIG. 2 is a flowchart showing a method for performing filtration (filtering method) by using the filter device according to the first embodiment. The filtering method using the filter device 1 according to the first embodiment will be described with reference to FIG. 2.

First, the user prepares the aspiration manifold 50, the rubber plug 40 with hole, and the filter fixing tool 30, and cleans and sterilizes each of these components (step S201). It is desirable to periodically scrub the aspiration manifold 50 and the rubber plug 40 with hole and perform processing to reduce the substance to be measured. For example, if the purpose of the test is microbial detection, high-pressure steam sterilization or dry heat sterilization is performed, and the components are installed in a clean environment such as a clean bench, and thereafter, a filtration operation is performed aseptically. The base 31 and the presser 32 are also prepared by being scrubbed and sterilized.

In addition, the user sterilizes the funnel 10 and the filter container 20. The filter body portion 21 is sterilized while being housed in the cover 22 (step S202).

Next, the user prepares a liquid sample (step S203).

The user installs the rubber plug 40 with hole in the adapter 60 connected to the aspiration manifold 50 (step S204).

The user then fits the upper part of the rubber plug 40 into the base fixing portion 33 of the base 31 to fix the base 31 to the rubber plug 40 (step S205).

The user causes the filter container 20 to stand upright by inserting the filter container 20 into the filter housing portion 34 of the base 31 fixed to the rubber plug 40 (step S206). At this time, with the filter container 20 merely placed atop the rubber plug 40, there is no airtightness between the upper surface 42 of the rubber plug 40 and the bottom surface 24 of the cover 22.

Here, the user screws the presser 32 onto the base 31 to fix the filter container 20 (step S207). When the female threaded section 36 of the presser 32 is screwed onto the male threaded section 35 of the base 31 in the vertically downward direction (the Z direction in FIG. 1), the filter support portion 37 on the inner upper surface of the presser 32 abuts on the upper surface 25 of the filter body portion 21. Further, when the presser 32 is screwed onto the base 31, the filter container 20 is pressed against the rubber plug 40 in the vertically downward direction. By means of this operation, the filter container 20 is fixed upright, and the airtightness between the upper surface 42 of the rubber plug 40 and the bottom surface 24 of the cover 22 is maintained. When the presser 32 presses the filter container 20 against the rubber plug 40 in an excessive manner, the rubber plug 40 is deformed or damaged. Therefore, the distance by which the presser 32 is screwed onto the base 31 may be stopped at a certain value so as to limit the pressing distance. The maximum allowable value of the pressing distance (the distance by which the filter container 20 is moved in the direction of the rubber plug 40 from a state where the filter container 20 is placed on the upper surface 42 of the rubber plug 40) depends on the hardness of the rubber plug 40, and is preferably no more than 2 mm, for example.

The flow path of the liquid sample may have a cylindrical shape or a shape other than the cylindrical shape. For example, the shape of the through-hole 41 of the rubber plug 40 can be any shape other than a cylinder. The shapes and cross-sectional areas of the inlet and the outlet may be different from each other. However, in order to maintain airtightness, the contact surface of contact between the cover 22 and the rubber plug 40 needs to be continuous so as to surround the liquid flow path.

Next, the user connects the sterilized funnel 10 to the upstream side of the filter body portion 21 (step S208). At this time, because the filter container 20 is fixed upright, it is possible to keep the funnel 10 upright even when the funnel 10 is connected. In addition, the funnel support portion 38 of the upper part of the presser 32 supports the funnel 10, thereby also stabilizing the upright position of the funnel 10. In a case where the funnel 10 and the filter container 20 are prepared in a state of being coupled together in advance, a procedure that includes causing the filter container 20 coupled to the funnel 10 to stand upright in step S206 and screwing the presser 32 to the base 31 in step 207 is performed, and thus step S208 is unnecessary.

The user pours the liquid sample into the upright funnel 10 (step S209).

The aspiration pump 70 connected to the aspiration manifold 50 is operated to perform aspiration-filtering of the liquid sample (step S210). When the aspiration pump 70 is activated, the downstream side of the filter 23 has a negative pressure, and thus the liquid in the funnel 10 passes through the filter body portion 21, the filter 23, the cover 22, the rubber plug 40, and the adapter 60, and is removed. Due to this configuration, only the fine particles in the liquid sample and the substance which is coupled to the filter 23 are collected by the filter 23.

When the aspiration/filtration is complete, the aspiration pump 70 is stopped (step S211).

Next, the user removes the funnel 10 from the filter body portion 21 (step S212). At this time, while using one hand to fix the filter fixing tool 30 (the base 31 or the presser 32), the user uses the other hand to pull out the funnel 10 in the vertically upward direction (the -Z direction). Alternatively, a U-shaped spatula can be inserted between the funnel 10 and the upper part of the presser 32, and the funnel 10 can be removed by being pushed upward according to the principle of leverage, with the upper part of the presser 32 serving as a fulcrum.

Next, the user removes the presser 32 from the base 31 (step S213).

Thereafter, the user removes the filter container 20 from the base 31 (step S214). Because the filter container 20 is merely placed on the upper surface 42 of the rubber plug 40, the user can remove the filter container 20 without resistance.

The substance collected on the filter 23 of the removed filter container 20 is subjected to analysis for the purpose of detection (step S215).

Meanwhile, because the base 31 remains fixed to the rubber plug 40 with hole, aspiration/filtration can be repeatedly performed by inserting the next filter container 20 into the filter housing portion 34 so that the filter container 20 stands upright (step S206) and is fixed (step S207). However, in a case where the rubber plug 40 with hole may be contaminated to such an extent that the next analysis would be affected by the filtration of the previous liquid sample, the base 31 and the rubber plug 40 with hole are removed and replaced with a cleaned base and cleaned rubber plug.

### (Method for Detecting Bacteria)

An example of a procedure for using the filter device 1 according to the first embodiment in a method for detecting bacteria (a bacterium or fungi) from a 100-mL water sample by means of the adenosine triphosphate (ATP) bioluminescence method will be described below.

The funnel 10 and the filter container 20 are sterilized in advance. It is desirable to also sterilize the rubber plug 40 with hole, the presser 32, the base 31, the adapter 60, and the aspiration manifold 50. The filter 23, which has a diameter of 6 mm and a hole diameter of 0.45 µm, is fixed to the bottom surface of the filter body portion 21. The outer diameter D24 of the cover 22 is 12 mm, the inner diameter D1 of the filter body portion 21 is 9 mm, and the internal volume of the filter body portion 21 is 0.8 mL. The outer diameter D12 of the lower tip of the funnel 10 is 9 mm and is fitted inside the filter body portion 21. The upper part of the funnel 10 has an inner diameter D11 of 60 mm and a height of 60 mm and is capable of holding 100 mL of liquid. The hole diameter D41 of the rubber plug 40 with hole is 9 mm and is smaller than the 12 mm of the outer diameter D24 of the cover 22. The inner diameter D31 of the filter housing portion 34 of the base 31 is 13 mm and is larger than the 12 mm of the outer diameter D24 of the cover 22.

The user fits the base 31 into the rubber plug 40 with hole, inserts the filter container 20 into the filter housing portion 34 of the base 31, and screws in and fixes the presser 32. The user then inserts the funnel 10 into the filter body portion 21 and pours 100 mL of the liquid sample into the funnel 10. When the aspiration pump 70 is activated, the liquid sample is subjected to aspiration/filtration. Due to this configuration, bacteria are collected on the filter 23, and the liquid is removed as a filtrate. The user takes out the funnel 10 and the presser 32 in that order, removes the filter container 20, adds 400 µL of an ATP scavenger (a reagent solution containing an ATP-degrading enzyme) to the filter 23, and performs incubation at 37°C to remove free ATP remaining in the filter 23. The filter container 20 is placed on a microtube and subjected to centrifugal filtration to remove the ATP scavenger as a filtrate. The filter body portion 21 is taken out of the filter container 20 and placed on a measurement tube, and 50 µL of an extraction fluid (a reagent solution for breaking down bacterial cells and extracting ATP in the bacterial cells) is added to the filter 23. Centrifugal filtration is performed and the extraction fluid is collected in a measurement tube. An ATP luminescent reagent (a reagent solution that causes a luminescent reaction by using a luciferin-luciferase reaction) is added to the measurement tube, and ATP is quantified through luminescence measurement. Because the amount of ATP is proportional to the amount of bacteria in the liquid sample, the original amount of bacteria can be known. A liquid sample having a volume of 100 mL is filtered through a filter, bacteria are concentrated on the filter 23, and ATP is extracted using 50uL of a reagent to achieve a 2000-fold concentration.

In a membrane filter method generally performed as a microbial detection method, a liquid sample is filtered through a membrane filter having a diameter of 47 mm and a hole diameter of 0.1 to 0.5 µm, and bacteria are collected on the filter. In comparison with a filter having a diameter of 47 mm, the concentration ratio can be made about 60 times higher by using a filter having a diameter of 6 mm, and thus detection can be performed with higher sensitivity.

Here, although an example of performing microbial detection using ATP measurement has been described, the object of detection is not limited to ATP. The bacteria may be detected using a method for detecting substances contained in bacterial cells, for example, bacteria constitutive substances such as lipids, sugars, proteins, and metabolites, or for detecting, by adding a substrate, the activity of enzymes contained in the bacterial cells. Furthermore, although an example of performing microbial detection has been described herein, the object of detection is not limited to bacteria. It can also be used for analytical purposes for detecting organic fine particles or inorganic fine particles contained in pure water, pharmaceutical products, or the like.

### (Advantageous Effects of First Embodiment)

By using the filter fixing tool 30 according to the first embodiment, it is possible to separate the part where the airtightness is established between the filter container 20 and the elastic body 40 and the part where the filter container 20 is fixed. Because the airtightness and the fixing are not established by the same parts, the filter container 20 can be easily removed by hand without frictional resistance when removing the filter container 20. As a result, the risk of contamination of the filter 23 of the filter container 20 during the removal operation can be reduced. Furthermore, by simply preparing a new filter fixing tool 30, it is possible to perform filtration by means of a membrane filter having a small area by utilizing a commercially available aspiration manifold and a rubber plug.

Meanwhile, as an alternative to fixing and maintaining the airtightness of the filter container 20, a method for aligning the inner diameter D41 of the rubber plug 40 with hole with the outer diameter D24 of the cover 22, and pushing the filter container 20 into the through-hole 41 of the rubber plug 40 with hole to erect the filter container 20 may be considered. In this case, because both fixing and airtightness are achieved by means of the outer surface of the cover 22, it is possible to firmly fix, whereas it is difficult to remove the filter container 20 from the rubber plug 40. In a case where the filter container 20 is small, it is particularly difficult to remove the filter container 20 by hand. In contrast, in the case of the filter device 1 according to the first embodiment, fixing and airtightness are established not by means of the outer surface of the cover 22 but, rather, by means of two horizontal surfaces (the bottom surface 24 and upper surface 25) of the filter container 20, and thus the filter container 20 can be easily removed with a small force. As described above, in the first embodiment, the filter container 20 can be easily removed by hand, and the risk of contamination due to dropping or touching the inside of the filter container 20 can be reduced in comparison with the conventional case where the filter container 20 needs to be removed with a strong force.

The horizontal surfaces (the bottom surface 24 and the upper surface 25) of the filter container 20 signify surfaces at an angle of 90 degrees to a vertical axis (the Z direction in the drawing) when the filter container 20 is made to stand upright. However, a range up to 90 ± 45 degrees with respect to the vertical axis of the horizontal surfaces (the bottom surface 24 and upper surface 25) of the filter container 20 is permissible as a range in which the presser 32 is capable of applying a force in the vertically downward direction to the filter container 20 and as a range in which the filter container 20 and the elastic body 40 (rubber plug 40) are capable of performing a function to apply a force to each other in the vertical direction.

The opening area of the inlet 11 of the funnel 10 is four or more times the opening area of the opening of the filter container 20 into which the tip portion of the funnel 10 is inserted. In the first embodiment, because the filter container 20 can be stably fixed by the filter fixing tool 30, the funnel 10 having a large opening area and being unstable can be stably supported.

In addition, by making the diameter D41 of the through-hole 41 of the rubber plug 40 smaller than the outer diameter D24 of the bottom surface 24 of the filter container 20, it is possible to maintain airtightness between the periphery of the inlet of the through-hole 41 and the bottom surface 24.

Further, the filter container 20 can be more firmly fixed by forming the threaded sections 35 and 36 on the base 31 and the presser 32, respectively, and screwing the presser 32 into the base 31.

In addition, by providing the funnel support portion 38 to the presser 32, the funnel 10 can be more stably fixed.

### Second Embodiment

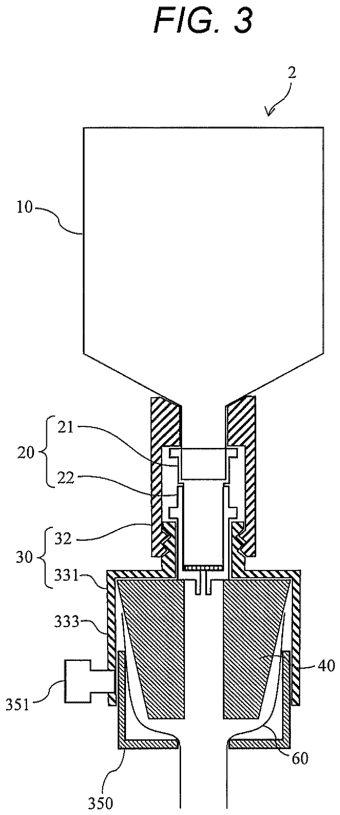

FIG. 3 is a diagram showing an example of a filter device according to a second embodiment. A configuration of a filter device 2 according to the second embodiment will be described with reference to FIG. 3. The same constituent elements as those according to the first embodiment are denoted by the same reference signs, and descriptions thereof will be omitted where appropriate.

In the first embodiment, the base 31 of the filter fixing tool 30 is fixed to the rubber plug 40, but in the second embodiment, a base 331 is fixed to an auxiliary adapter 350. By fixing the base 331 to the adapter 60, it is to be expected that the fixation of the filter container 20 and the funnel 10 is more stable than in the case of fixation to the elastic body (rubber plug 40). However, it is difficult to fix the base 331 to the adapter 60, which has a tapered cup in which the diameter of the upper part into which the rubber plug 40 is introduced is large and the diameter of the lower part is small. Therefore, in the second embodiment, the auxiliary adapter 350 is attached to the cup of the adapter 60. Specifically, the base 331 is fixed to the auxiliary adapter 350 such that the auxiliary adapter 350 and a base fixing portion 333 of the base 331 are fitted to each other. A fixing screw 351 may further strengthen the fixing of the base 331 to the auxiliary adapter 350. Alternatively, both the base fixing portion 333 and the auxiliary adapter 350 may be fixed by being threaded and screwed together.

### (Advantageous Effects of Second Embodiment)

By using the base 331 according to the second embodiment, the base 331 can be fixed to the auxiliary adapter 350 without being fixed to the rubber plug 40 serving as the elastic body, or the adapter 60, which has a special shape. Other advantageous effects are similar to those of the first embodiment.

### Third Embodiment

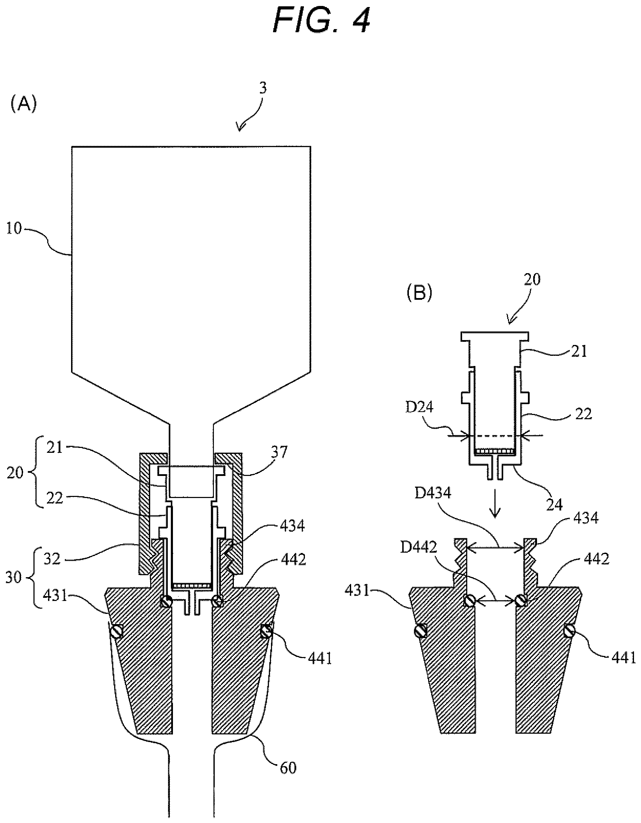

FIG. 4 is a diagram showing an example of a filter device according to a third embodiment. A configuration of a filter device 3 according to the third embodiment will be described with reference to FIG. 4. The same constituent elements as those according to the first embodiment are denoted by the same reference signs, and descriptions thereof will be omitted where appropriate.

In the first embodiment, the rubber plug 40 with hole is attached to a commercially available adapter 60; however, in the third embodiment, a base 431 is attached to the commercially available adapter 60.

First, an aspiration manifold 50 (see FIG. 1) for filtration is prepared, and an adapter 60 having a cup-shaped tip is attached to the aspiration manifold 50. The base 431 according to the third embodiment is preferably made of a material capable of dry heat sterilization or high-pressure steam sterilization, such as stainless steel, aluminum, or hard plastic. An O-ring 441 that affords fixing and airtightness with respect to the adapter 60 and an O-ring 442 that affords airtightness with respect to the cover 22 are attached to the base 431. The O-rings 441 and 442 are preferably made of a material that can be subjected to dry heat sterilization or high-pressure steam sterilization. However, because the O-rings 441 and 442 are inexpensive, a material that can be sterilized may be supplied in a sterilized state and may be disposable.

The inner diameter D442 of the O-ring 442 is smaller than the outer diameter D24 of the cover 22. The inner diameter D434 of the filter housing portion 434 is larger than the outer diameter D24 of the cover 22. Due to this configuration, when the filter container 20 is taken in and out of the filter housing portion 434, the filter container 20 can be easily taken in and out by hand without frictional resistance and without force. When the filter support portion 37 on the inner upper surface of the presser 32 presses the filter container 20 against the O-ring 442 in the vertically downward direction, the filter container 20 is fixed and airtightness is maintained between the bottom surface 24 of the cover 22 and the O-ring 442.

### (Advantageous Effects of Third Embodiment)

In the configuration of the third embodiment, the base 431 can be directly fixed to the adapter 60 and thus is stable. Furthermore, because the airtightness is established by the inexpensive O-rings 441 and 442, it is possible to make airtight parts disposable, omit the task of cleaning the airtight parts, and simplify the operation. Other advantageous effects are similar to those of the first embodiment.

### Fourth Embodiment

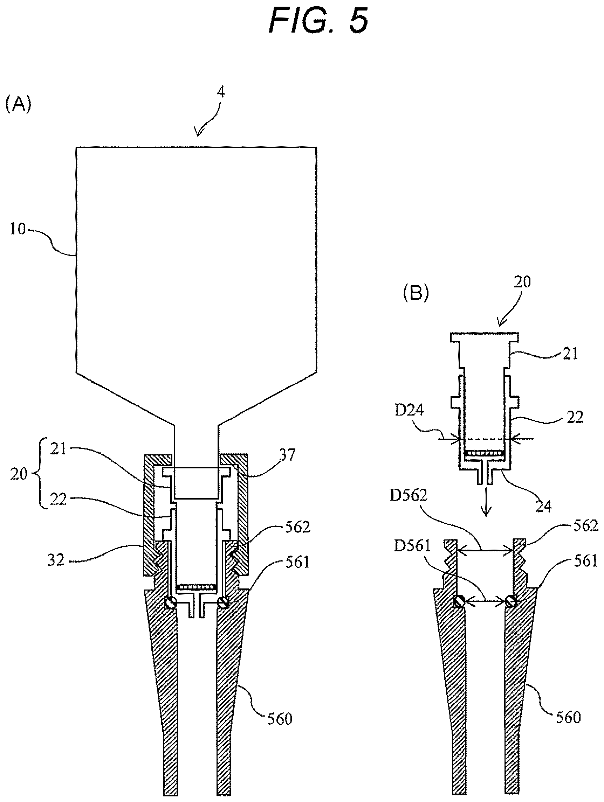

FIG. 5 is a diagram showing an example of a filter device according to a fourth embodiment. A configuration of a filter device 4 according to the fourth embodiment will be described with reference to FIG. 5. The same constituent elements as those according to the first embodiment are denoted by the same reference signs, and descriptions thereof will be omitted where appropriate.

In the first to third embodiments, a commercially available adapter 60 was used, but in the fourth embodiment, an original adapter 560 is used.

First, the aspiration manifold 50 (see FIG. 1) for filtration is prepared, and an adapter 560 according to the fourth embodiment is attached to the aspiration manifold 50. The adapter 560 according to the fourth embodiment is made of a hard material capable of dry heat sterilization or high-pressure steam sterilization, such as metal or resin, and has an O-ring 561 mounted therein. The inner diameter D561 of the O-ring 561 is smaller than the outer diameter D24 of the cover 22. The adapter 560 has a filter housing portion 562, and the inner diameter D562 of the filter housing portion 562 is larger than the outer diameter D24 of the cover 22. When the filter container 20 is taken in and out of the filter housing portion 562, the filter container 20 can be easily taken in and out by hand without frictional resistance and without exerting force. When the filter support portion 37 on the inner upper surface of the presser 32 presses the filter container 20 against the O-ring 561 in the vertically downward direction, the filter container 20 is fixed and airtightness is maintained between the bottom surface 24 of the cover 22 and the O-ring 561.

### (Advantageous Effects of Fourth Embodiment)

In the configuration of the fourth embodiment, because the presser 32 is directly fixed to the adapter 560, more stable fixing is possible. Furthermore, because the airtightness is established by the inexpensive O-ring 561, it is possible to make the airtight parts disposable, omit the task of cleaning the airtight parts, and simplify the operation. Other advantageous effects are similar to those of the first embodiment.

Furthermore, as a variation on the configuration of the fourth embodiment, a method for preparing the filter container 20 in a state where the O-ring 561 is fastened to the bottom surface of the filter container 20 is also conceivable. When the filter container 20 and the O-ring 561 are fastened to each other, the task of simply replacing the filter container 20 obviates the need for the task of replacing the O-ring 561, and thus the operation can be performed more easily.

### Fifth Embodiment

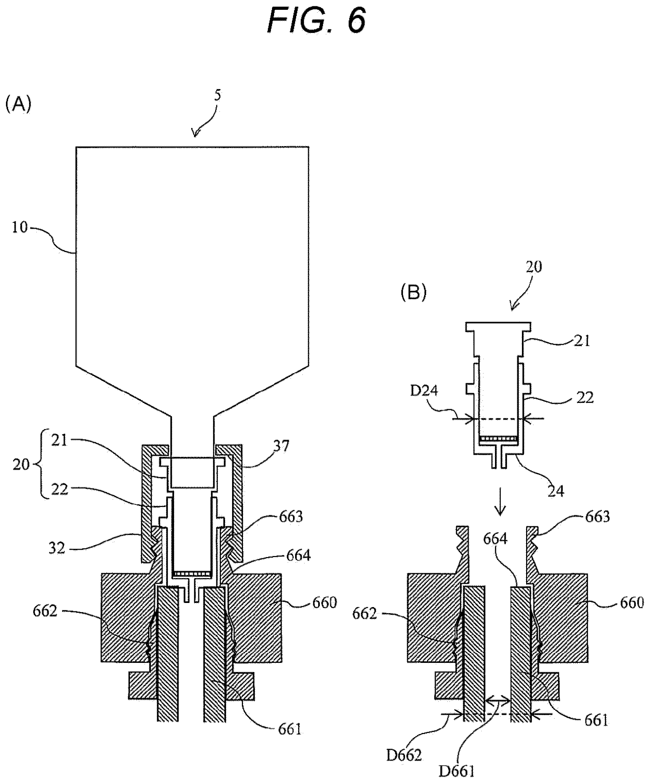

FIG. 6 is a diagram showing an example of a filter device according to a fifth embodiment. A configuration of a filter device 5 according to the fifth embodiment will be described with reference to FIG. 6. The same constituent elements as those according to the first embodiment are denoted by the same reference signs, and descriptions thereof will be omitted where appropriate.

In the fifth embodiment, an example in which airtightness is maintained by means of an end surface 664 of a silicon tube 661 will be described.

In the fifth embodiment, the silicon tube 661 is inserted into a tube adapter 660. The silicon tube 661 is fixed by inserting the tube fixing component 662 between the tube adapter 660 and the silicon tube 661. The tube adapter 660 is stably fixed to a fixed base (not illustrated). The tube adapter 660 has a filter housing portion 663 that houses the filter container 20.

The outer diameter D24 of the cover 22 is larger than the inner diameter D661 of the silicon tube 661 and smaller than the outer diameter D662. The end surface 664 of the silicon tube 661 is smooth, and when the filter support portion 37 on the inner upper surface of the presser 32 presses the filter container 20 against the end surface 664 of the silicon tube 661 in the vertically downward direction, the filter container 20 is fixed and airtightness is maintained between the bottom surface 24 of the cover 22 and the end surface 664 of the silicon tube 661.

### (Advantageous Effects of Fifth Embodiment)

Aspiration/filtration can be performed by connecting the opening on the opposite side of the silicon tube 661 to the aspiration pump 70. Alternatively, aspiration/filtration can be performed by creating a negative pressure in the silicon tube 661 by pinching the outer surface of the silicon tube by means of a peristaltic pump. A plurality of the silicon tubes 661 cleaned in advance through washing or sterilization are prepared and replaced for each filtration, and hence filtration can always be performed in a clean flow path, contamination of the filter container 20 can be reduced, and the accuracy of analysis can be improved. In addition, by using a transparent or translucent flow path such as the silicon tube 661, the progress of filtration can be visually checked. Other advantageous effects are similar to those of the first embodiment.

Note that the material of the silicon tube 661 may be any material having appropriate elasticity for maintaining airtightness, and is not limited to silicon.

### Sixth Embodiment

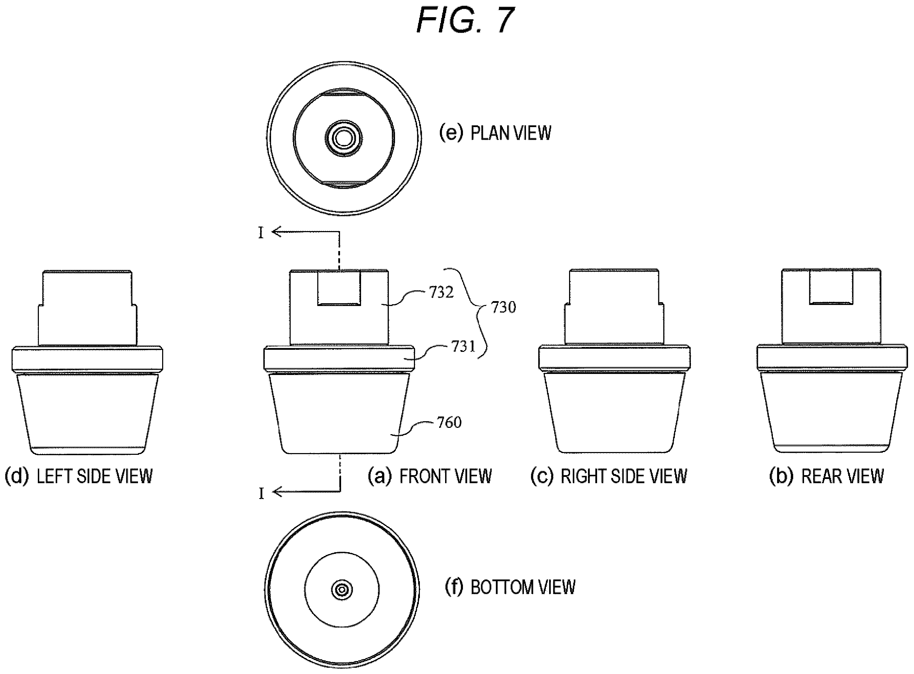

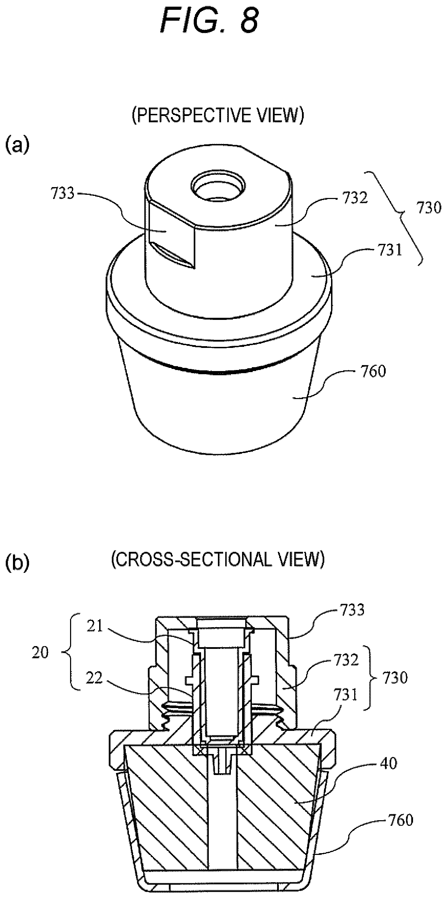

FIGS. 7 and 8 are diagrams showing an example of a filter fixing tool according to a sixth embodiment. FIG. 7 is a 6-surface view showing an example of the filter fixing tool according to the sixth embodiment, and FIG. 8 is a perspective view of the filter fixing tool according to the sixth embodiment and an I-I cross-sectional view of a cross-section taken along the line I-I shown in FIG. 7. A configuration of a filter fixing tool 730 according to the sixth embodiment will be described with reference to FIGS. 7 and 8. The same constituent elements as those according to the first embodiment are denoted by the same reference signs, and descriptions thereof will be omitted where appropriate.

The filter fixing tool 730 according to the sixth embodiment is configured from two parts. The filter fixing tool 730 includes a base 731 and a presser 732. The base 731 is fixed to the rubber plug 40 with hole installed in the adapter 760 connected to the aspiration manifold 50 (see FIG. 1). The base 731 and presser 732 include taps and are fitted to each other. A cutout 733 is formed on an outer surface of the presser 732 to facilitate manual attachment and removal of screws.

### (Advantageous Effects of Sixth Embodiment)

With the configuration of the sixth embodiment, advantageous effects similar to those of the first embodiment can be expected. In addition, by forming the cutout 733, it is easy to manually attach and detach the presser 732.

### Seventh Embodiment

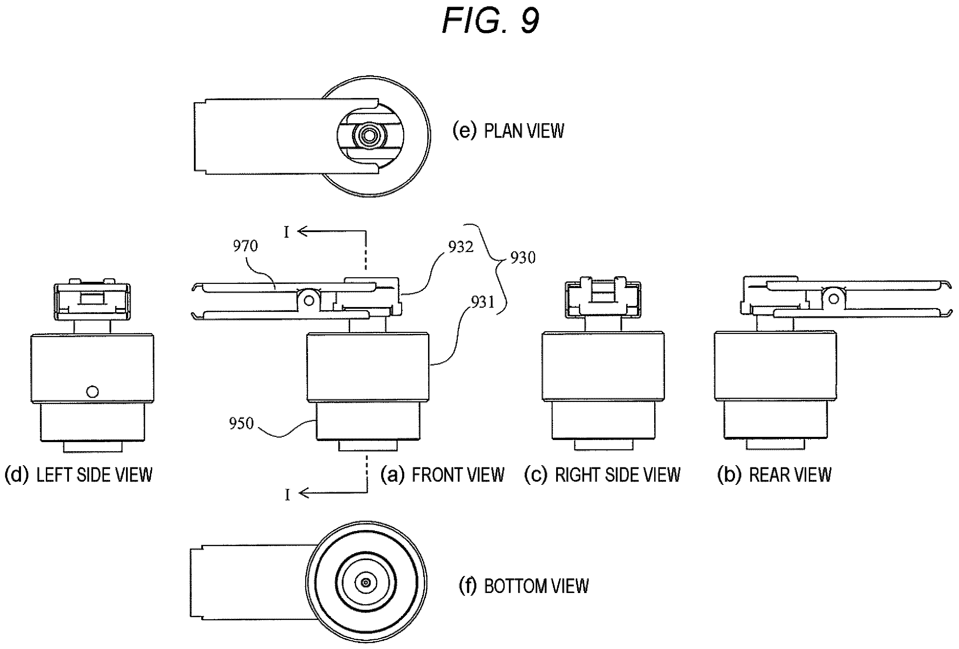

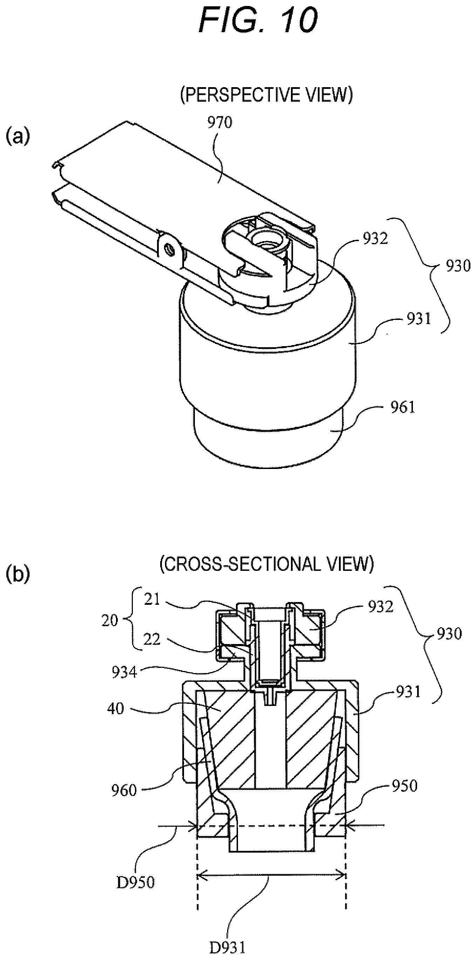

FIGS. 9 and 10 are diagrams showing an example of a filter fixing tool according to a seventh embodiment. FIG. 9 is a 6-surface view showing an example of the filter fixing tool according to the seventh embodiment, and FIG. 10 is a perspective view of the filter fixing tool according to the seventh embodiment and an I-I cross-sectional view of a cross-section taken along the line I-I shown in FIG. 9. A configuration of a filter fixing tool 930 according to the seventh embodiment will be described with reference to FIGS. 9 and 10. The same constituent elements as those according to the first embodiment are denoted by the same reference signs, and descriptions thereof will be omitted where appropriate.

The filter fixing tool 930 according to the seventh embodiment is configured from two parts. The filter fixing tool 930 includes a base 931 and a presser 932. An auxiliary adapter 950 is attached to the outside of an adapter 960 connected to the aspiration manifold 50 (see FIG. 1). A rubber plug 40 with hole is installed inside the adapter 960. The base 931 is placed on the rubber plug 40 with hole. The inner diameter D931 of the base 931 is 0.5 to 2 mm larger than the outer diameter D950 of the auxiliary adapter 950. Due to this configuration, the base 931 can be easily attached to and detached from the auxiliary adapter 950, and the lateral swing of the base 931 can be prevented by setting the fitting amount between the base and the auxiliary adapter at 5 mm or more.

The filter container 20 is housed in a filter housing portion 934 of the base 931. The presser 932 is placed on the base 931. In this state, there is a gap between the upper surface of the base 931 and the lower surface of the presser 932, and this gap is 0.5 mm or more. By holding the base 931 and the presser 932 from both sides using the clamp 970, the filter container 20 is pressed against the rubber plug 40 with hole to form an airtight flow path.

If the clamp 970 has a shape that presses the upper surface of the filter container 20, the filter container 20 can be fixed by the clamp 970 and the base 931 without using the presser 932.

### (Advantageous Effects of Seventh Embodiment)

With the configuration of the seventh embodiment, advantageous effects similar to those of the second embodiment can be expected. Further, by using the clamp 970, the airtightness between the presser 932 and the base 931 can be maintained.

### Eighth Embodiment

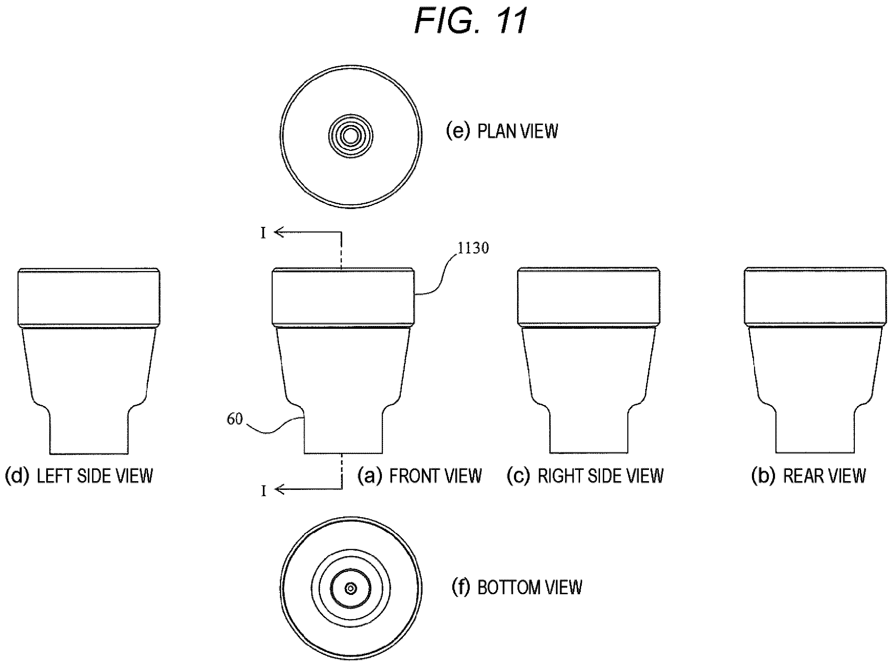

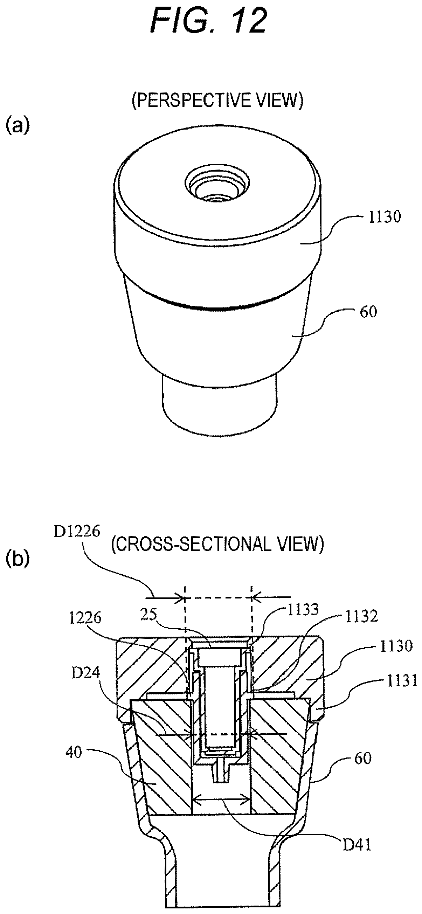

FIGS. 11 and 12 are diagrams illustrating an example of the filter fixing tool according to the eighth embodiment. FIG. 11 is a 6-surface view showing an example of the filter fixing tool according to the eighth embodiment, and FIG. 12 is a perspective view of the filter fixing tool according to the eighth embodiment and an I-I cross-sectional view of a cross-section taken along the line I-I shown in FIG. 11. A configuration of a filter fixing tool 1130 according to the eighth embodiment will be described with reference to FIGS. 11 and 12. The same constituent elements as those according to the first embodiment are denoted by the same reference signs, and descriptions thereof will be omitted where appropriate.

The filter fixing tool 1130 (presser 1130) according to the eighth embodiment is configured from one part. A rubber plug 40 with hole is installed inside the adapter 60 connected to the aspiration manifold 50 (see FIG. 1). The hole diameter D41 of the rubber plug 40 with hole is 0.3 mm or more larger than the outer diameter D24 of the filter container 20. Therefore, there is no friction in attaching/detaching the filter container 20 to/from the rubber plug 40 with hole. The hole diameter D41 of the rubber plug 40 with hole is 0.5 mm or more smaller than the outer diameter D1226 of a protrusion 1226 formed on the outer peripheral surface of the filter container 20. Due to this configuration, the protrusion 1226 is caught by the rim of the hole of the rubber plug 40. In this state, there is a gap between the hole of the rubber plug 40 and the outer peripheral surface of the filter container 20, and the filter container 20 can be inclined to the left and right. Therefore, in a case where the funnel 10 is attached to the filter container 20, the stability of the funnel 10 is not sufficient.

Therefore, in the eighth embodiment, the presser 1130 is fixed to the rubber plug 40. The presser 1130 has a fixing portion 1131 which is to be fitted into the rubber plug 40 with hole. The presser 1130 is fixed by fitting the fixing portion 1131 into the rubber plug 40 with hole. At this time, because the filter fixing portions 1132 and 1133 inside the presser 1130 respectively press the upper surface of the protrusion 1226 of the filter container 20 and the upper surface 25 of the filter container 20 in the vertically downward direction, airtightness is maintained between the lower surface of the protrusion 1226 and the upper surface of the rubber plug 40 with hole.

### (Advantageous Effects of Eighth Embodiment)

In the eighth embodiment, the protrusion 1226 formed on the filter container 20 can be used to maintain airtightness between the lower surface of the protrusion 1226 and the upper surface of the rubber plug 40 with hole. Furthermore, in the eighth embodiment, the filter container 20 can be fixed using only the presser 1130 (without the base). Other advantageous effects are similar to those of the first embodiment.

### Ninth Embodiment

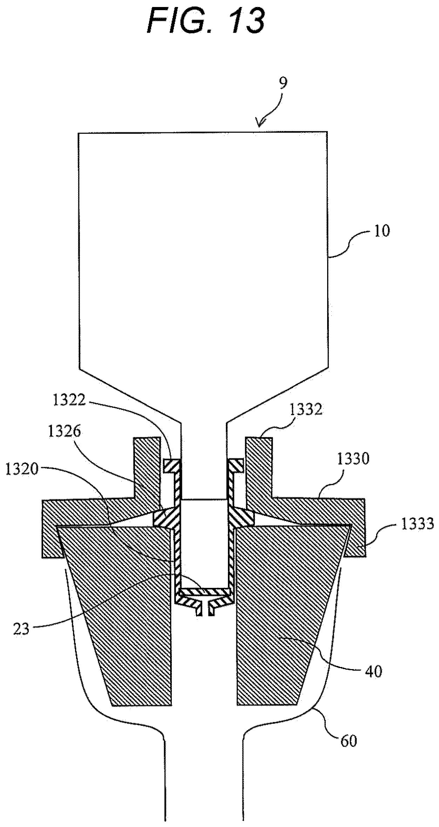

FIG. 13 is a diagram showing an example of a filter device according to a ninth embodiment. A configuration of a filter device 9 according to the ninth embodiment will be described with reference to FIG. 13. The same constituent elements as those according to the first embodiment are denoted by the same reference signs, and descriptions thereof will be omitted where appropriate.

In the ninth embodiment, a filter container 1320 without a cover (for example, the cover 22 of FIG. 1) is fixed to the rubber plug 40 with hole. The filter fixing tool 1330 (the presser 1330) according to the ninth embodiment is one part, and the presser 1330 presses the upper surface of a protrusion 1326 of the filter container 1320 vertically downward, and presses the lower surface of the protrusion 1326 against the upper surface of the rubber plug 40 with hole. At this time, a fixing portion 1333 of the presser 1330 is fitted into the rubber plug 40 with hole. Here, the upper surface and the lower surface of the protrusion 1326 may be at an angle of up to 45° relative to a surface perpendicular to the axis of the cylindrical filter container 1320. The shape of the filter container 1320 is not limited to a cylindrical shape. However, it is necessary to maintain the airtightness between the lower surface of the protrusion 1326 and the periphery of the opening of the rubber plug 40 by means of continuous contact therebetween, and the lower surface of the protrusion and the periphery of the opening are coupled to the outlet of the funnel to maintain the airtightness.

### (Advantageous Effects of Ninth Embodiment)

Due to this configuration, the filter container 1320 is fixed. Because the opening 1332 of the presser 1330 does not come into contact with the opening 1322 of the filter container 1320, the risk of contamination from the opening 1322 of the filter container 1320 can be reduced. In addition, because the height of the opening 1332 of the presser 1330 is higher than the height of the opening 1322 of the filter container 1320, a removal tool does not come into contact with the opening 1322 of the filter container 1320 when the funnel 10 is to be removed, and hence the risk of contamination from the opening 1322 of the filter container 1320 can be reduced. Other advantageous effects are similar to those of the first embodiment.

### Tenth embodiment

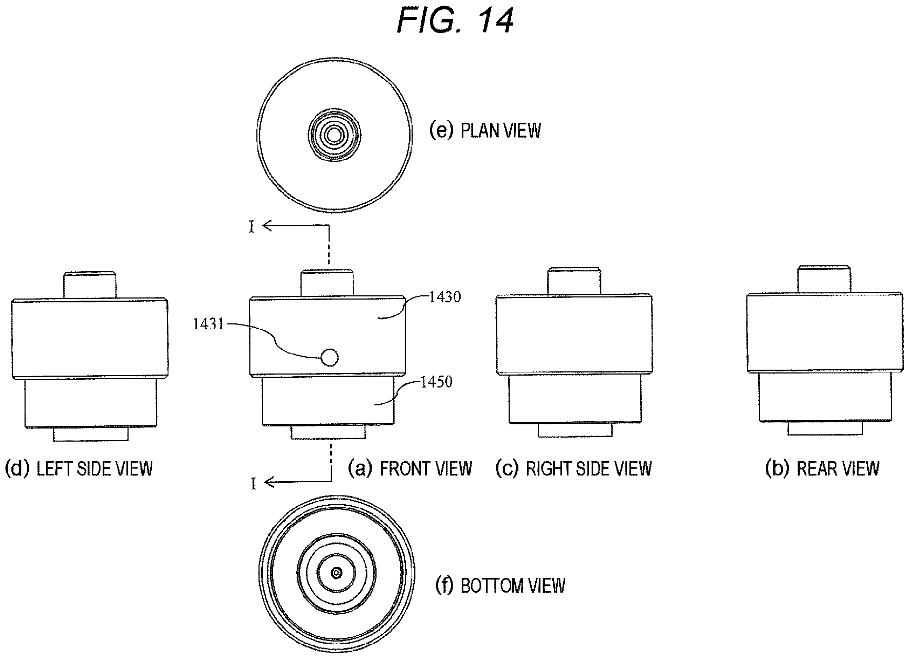

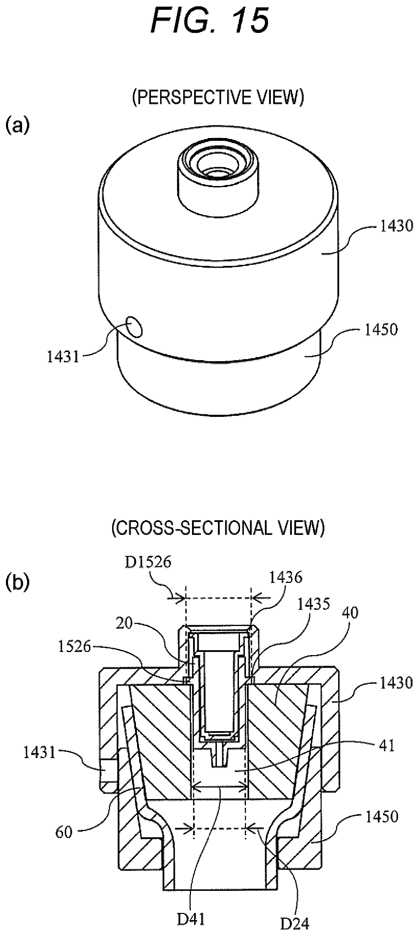

FIGS. 14 and 15 are diagrams illustrating an example of the filter fixing tool according to a tenth embodiment. FIG. 14 is a 6-surface view showing an example of the filter fixing tool according to the tenth embodiment, and FIG. 15 is a perspective view of the filter fixing tool according to the tenth embodiment and an I-I cross-sectional view of a cross-section taken along the line I-I shown in FIG. 14. The configuration of the filter fixing tool 1430 (presser 1430) according to the tenth embodiment will be described with reference to FIGS. 14 and 15. The same constituent elements as those according to the first embodiment are denoted by the same reference signs, and descriptions thereof will be omitted where appropriate.

The presser 1430 according to the tenth embodiment is configured from one part. An auxiliary adapter 1450 is attached to the outside of the adapter 60 connected to the aspiration manifold 50 (see FIG. 1). In addition, a rubber plug 40 with hole is installed inside the adapter 60. Further, the hole diameter D41 of the rubber plug 40 with hole is 0.3 mm or more larger than the outer diameter D24 of the filter container 20. Due to this configuration, there is no friction in attaching or detaching the filter container 20 to and from the rubber plug 40 with hole. Furthermore, the hole diameter D41 of the rubber plug 40 with hole is 0.5 mm or more smaller than the outer diameter D1526 of a protrusion 1526 formed on the outer periphery of the filter container 20, and thus the protrusion 1526 enters a state of being caught on the rim of the through-hole 41 in the rubber plug 40. In this state, there is a gap between the through-hole 41 of the rubber plug 40 and the outer surface of the filter container 20, and the filter container 20 can be inclined to the left and right. Therefore, in a case where the funnel 10 is attached to the filter container 20, the stability of the funnel 10 is not sufficient.

Therefore, in the tenth embodiment, the presser 1430 is fixed to the auxiliary adapter 1450. The presser 1430 is provided with a screw hole 1431, and the presser 1430 is firmly fixed using a screw (not illustrated) to the auxiliary adapter 1450. At this time, filter fixing portions 1435 and 1436 inside the presser 1430 respectively push the upper surface of the protrusion 1526 of the filter container 20 and the upper surface of the inlet of the filter container 20 in the vertically downward direction and maintain airtightness between the lower surface of the protrusion 1526 and the upper surface of the rubber plug 40 with hole.

### (Advantageous Effects of Tenth Embodiment)

With the configuration of the tenth embodiment, the filter container 20 is fixed by a one-touch operation, and the filter container 20 is easily attached and detached. In addition, because the presser 1430 can be fixed using a screw to the auxiliary adapter 1450, the filter container 20 can be fixed more stably. Other advantageous effects are similar to those of the first embodiment.

### (Method for Performing Filtration (Filtering Method) Using Filter Fixing Tool according to Ninth and Tenth embodiments)

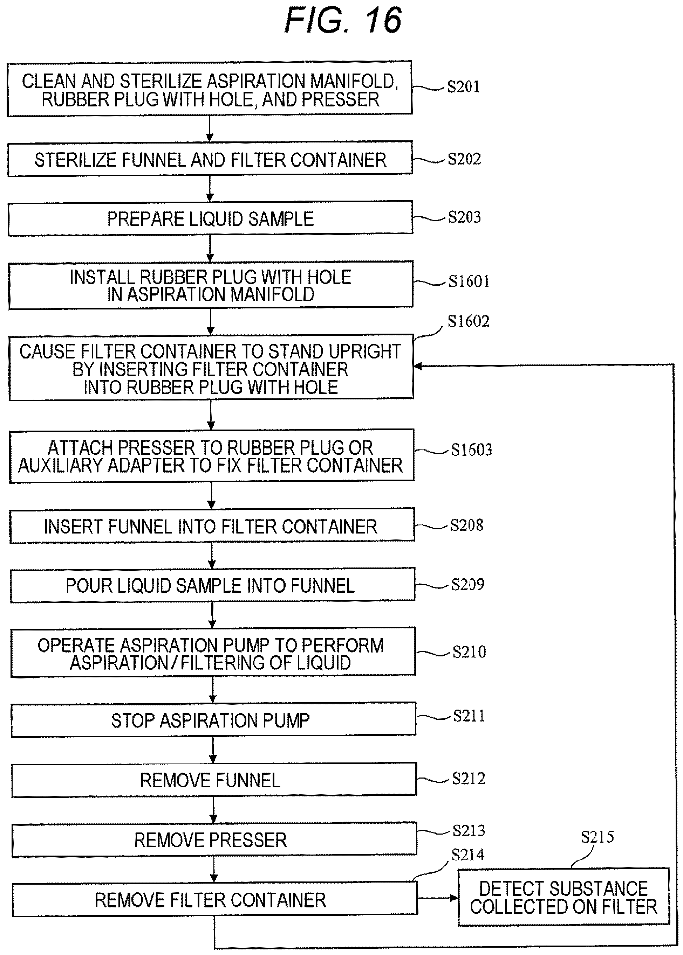

In the ninth and tenth embodiments, because no base is used, the filtration procedure is as shown in FIG. 16. The same constituent elements as those of the first embodiment are denoted by the same reference signs, and descriptions thereof will be omitted as appropriate.

That is, after the rubber plug 40 with hole has been installed in the aspiration manifold 50 (S1601), cause the filter container 20 to stand upright by inserting the filter container 20 into the through-hole 41 of the rubber plug 40 (S1602). A presser 1330 or 1440 is then attached to fix the filter container 20 (S1603).

Note that the present disclosure is not limited to the above-described embodiments and includes various modifications thereof. For example, the above-described embodiments have been described in detail to facilitate understanding of the present disclosure, and are not necessarily limited to or by embodiments having all the configurations described. In addition, part of the configuration of one embodiment can be replaced with the configuration of another embodiment, and the configuration of the other embodiment can also be added to the configuration of the one embodiment. Moreover, it is possible to add other configurations to part of the configurations of the embodiments, and to eliminate or substitute parts of the configurations of the embodiments.

For example, in the above-described embodiments, an example in which the aspiration pump 70 is driven to perform aspiration/filtration has been described, but the present disclosure is not limited to aspiration/filtration using the aspiration pump 70, rather, filtration may be performed by pressurizing a liquid sample, or filtration may be performed under the weight of the liquid sample itself.

### Reference Signs List

1, 2, 3, 4, 5, 9 filter device
10 funnel
20 filter container
21 filter body portion
22 cover
23 filter
24 bottom surface
25 upper surface
30, 730, 930, 1130, 1330, 1430 filter fixing tool
31, 331, 431, 731, 931 base
32, 732, 932 presser
33 base fixing portion
34, 434, 934 filter housing portion
35 male threaded section
36 female threaded section
37 filter support portion
38 funnel support portion
40 rubber plug with hole
41 through-hole
42 upper surface
50 aspiration manifold
60, 560, 760, 960 adapter
350, 950, 1450 auxiliary adapter
70 aspiration pump
351 fixing screw
441, 442, 561 o-ring
562 filter housing portion
660 tube adapter
661 silicon tube
662 tube fixing component
663 filter housing portion
664 end surface
733 cutout
970 clamp
1126, 1526 protrusion
1131 fixing portion
1132, 1133, 1435, 1436 filter fixing portion
1332 opening
1333 fixing portion
1431 screw hole

## Claims

1. A filter device for filtering a sample, the filter device comprising:
a funnel having an inlet through which the sample is introduced and an outlet having an opening area smaller than an opening area of the inlet;
a cylindrical filter container having an inlet, to which a tip portion which includes the outlet of the funnel is coupled, and an outlet, and having, between the inlet and the outlet, a filter that collects an object contained in the sample;
an elastic body that has a through-hole serving as a flow path for the sample that has passed through the filter, an inlet periphery of the through-hole being in contact with the filter container; and
a filter fixing tool that abuts on the filter container to support the filter container and that presses the filter container against the elastic body,
wherein the filter fixing tool presses the filter container against the elastic body to hermetically seal the inlet periphery of the through-hole in the elastic body by means of a contact surface of the filter container which corresponds to the inlet periphery.

2. The filter device according to claim 1, wherein an opening area of the inlet of the funnel is four or more times larger than whichever area is the smaller of an opening area of an opening of the filter container into which the tip portion of the funnel is inserted, and an effective area of the filter.

3. The filter device according to claim 1, wherein the contact surface of the filter container is a surface at an angle of 90° ± 45° or less to a direction in which the filter container is to be pressed against the elastic body.

4. The filter device according to claim 1, wherein the diameter of the inlet periphery of the through-hole in the elastic body is smaller than an outer diameter of the contact surface of the filter container.

5. The filter device according to claim 1,
wherein the filter fixing tool includes:
a presser that abuts on the filter container to support the filter container and that presses the filter container against the elastic body; and
a cover that fixes the presser.

6. The filter device according to claim 5,
wherein an inner peripheral surface or an outer peripheral surface of the presser is subjected to thread machining, and a surface of the cover facing the inner peripheral surface or the outer peripheral surface subjected to the thread machining is subjected to thread machining, and
by screwing the presser into the cover, the filter container is fixed in a state of being pressed against the elastic body.

7. The filter device according to claim 1, wherein the distance by which the filter container is pressed against the elastic body by the filter fixing tool is 2 mm or less.

8. The filter device according to claim 1, wherein the filter fixing tool includes a funnel support portion that supports the funnel.

9. A filter fixing tool that fixes a cylindrical filter container provided with a filter for filtering a sample to an elastic body that is disposed on a downstream side of the filter container and that has a through-hole serving as a flow path of the sample that has passed through the filter, an inlet periphery of the through-hole being in contact with the filter container, the filter fixing tool comprising:
a filter housing portion that houses at least part of the filter container; and
a filter support portion that abuts on the filter container housed in the filter housing portion to support the filter container and that presses the filter container against the elastic body,
wherein the filter support portion presses the filter container against the elastic body to hermetically seal the inlet periphery of the through-hole in the elastic body by means of a contact surface of the filter container which corresponds to the inlet periphery.

10. The filter fixing tool according to claim 9, wherein the contact surface of the filter container is a surface at an angle of 90° ± 45° or less to a direction in which the filter container is to be pressed against the elastic body.

11. The filter fixing tool according to claim 9, including:
a presser having the filter support portion; and
a cover for fixing the presser.

12. The filter fixing tool according to claim 11,
wherein an inner peripheral surface or an outer peripheral surface of the presser is subjected to thread machining, and a surface of the cover facing the inner peripheral surface or the outer peripheral surface subjected to the thread machining is subjected to thread machining, and
by screwing the presser into the cover, the filter container is fixed in a state of being pressed against the elastic body.

13. The filter fixing tool according to claim 9, wherein the distance by which the filter container is pressed against the elastic body by the filter support portion is 2 mm or less.

14. The filter fixing tool according to claim 9, further including a funnel support portion that supports the funnel attached to the filter container.

15. A filtering method, comprising:
preparing a cylindrical filter container having a filter that collects an object contained in a sample, an elastic body having a through-hole serving as a flow path of the sample, an inlet periphery of the through-hole being in contact with the filter container, and a filter fixing tool for fixing the filter container;
causing the filter fixing tool to abut on the filter container to support the filter container;
pressing the supported filter container against the elastic body to hermetically seal the inlet periphery of the through-hole in the elastic body by means of a contact surface of the filter container which corresponds to the inlet periphery; and
introducing the sample into the filter container and collecting the object by means of the filter.
